# EUROPÄISCHE PATENTANMELDUNG

(11) **EP 0 535 532 A2**
(43) Veröffentlichungstag der Anmeldung: **07.04.1993**
(21) Anmeldenummer: 92116345.7
(22) Anmeldetag: 24.09.1992
(51) Int. Cl.: A01F 15/14

(54) **Verfahren zum Binden eines Ballens und Vorrichtung hierfür**

(30) Priorität: 01.10.1991 DE 4132664
(71) Anmelder: DEERE & COMPANY, Moline, Illinois 61265 (US)
(72) Erfinder: Viaud, Jean, F-57200 Sarreguemines (FR); Pfrimmer, Ernest, F-57520 Rouhling (FR)
(74) Vertreter: Feldmann, Bernhard

(57) **Zusammenfassung**

2.1. Bei herkömmlichen Verfahren zum Binden eines Ballens (44) wird Bindemittel (46) auf die Umfangsfläche des Ballens (44) aufgewickelt und nach mehreren Windungen abgeschnitten. Der Nachteil hierbei besteht darin, daß sich das freie Ende des Bindemittels (46) bei der weiteren Handhabung des Ballens (44) löst und evtl. mehrere Windungen abzieht, so daß der Ballen (44) nicht mehr ausreichend fest zusammen gehalten wird.

2.2. Es werden ein Verfahren und zwei Vorrichtungen vorgeschlagen, nach denen das freie Ende des Bindemittels (46) über ein Haftmittel (50) mit dem Ballen (44) verbunden wird.

2.3. Dieses Verfahren und die Vorrichtungen können bei landwirtschaftlich nutzbaren Rundballenpressen Verwendung finden.

## Beschreibung

Die Erfindung betrifft ein Verfahren zum Binden eines Ballens und eine Vorrichtung hierfür.

Bei herkömmlichen Verfahren zum Binden eines Balles, insbesondere eines in einer Rundballenpresse gebildeten runden Ballens wird nach Abschluß des Bildungsvorgangs der Ballen weiter in Umfangsrichtung bewegt und Bindemittel in der Form von Garn oder Kunststoffschnur um dessen Umfangsfläche gewickelt. Der Bindevorgang wird beendet, wenn mehrere Wicklungen des Bindemittels um den Ballen gelegt worden sind; anschließend wird der Ballen aus der Ballenbildungskammer ausgeworfen.

Der Nachteil dieses nahezu an allen Rundballenpressen durchgeführten Verfahrens besteht darin, daß die Eigenreibung des Bindemittels infolge der Spannung auf dem Ballen nicht ausreicht, das Ende des Bindemittels zu halten, so daß sich dieses von dem Ballen löst. Während der weiteren Handhabung des Ballens fällt immer mehr Bindemittel von dem Ballen ab, so daß in Extremfällen der Ballen schließlich nicht mehr gebunden ist und auseinander fällt.

Es ist zudem bekannt (DE-OS-26 14 154), die Garnenden eines um einen Rundballen geschlungenen Bindemittelstranges miteinander zu verknüpfen; hierzu ist jedoch ein Knüpfapparat und ein Anhänger erforderlich, auf dem der Ballen zum Verbinden der Bindemittelenden abgelegt werden kann.

Die der Erfindung zugrundeliegende Aufgabe wird darin gesehen, ein Verfahren und möglichst eine Vorrichtung zu dessen Durchführung vorzuschlagen, mit deren Hilfe ohne die Verwendung eines Knüpfapparats das Garnende sicher auf dem gebundenen Ballen gehalten wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bleibt das Bindemittelende nicht lose und kann somit während der weiteren Handhabung nicht abfallen. Die Haftung des Bindemittels an dem Ballen kann auf verschiedene Weise herbeigeführt werden, wobei auf sehr einfache Art entweder ein als Foliestreifen ausgebildetes Haftmittel zugeführt wird, das das Bindemittel auf dem Ballen und möglicherweise auch auf den vorhergegangenen Windungen festlegt, oder das Bindemittel eine als Haftmittel verwendete Verlängerung aufweist, die durch Einstechen, d. h. Einnähen mit den Ballen verbunden wird.

Handelt es sich bei dem Haftmittel um einen Folienstreifen, kann dieser an dem Ballen kleben, durch Haftreibung auf einer darunterliegenden Folienbahn halten oder von ihn durchdringenden Guts gehalten werden.

Bei einer anderen Verbindung des Bindemittels mit dem Ballen wird das Haftmittel in das gepreßte Gut hineingedrückt oder -gestoßen und aufgrund der dadurch entstandenen Haftreibung gehalten.

Wenn die Verbindung des Bindemittels bzw. des Haftmittels mit dem Ballen an einer seiner Stirnseiten stattfindet, kann das Haftmittel beim Rollen des Ballens nicht, jedenfalls kaum, mit dem Boden, Bordwänden eines Anhängers, Stallwänden u.s.w. in Berührung kommen und an diesen hängen bleiben. Darüberhinaus ist es einfacher, an den Seitenwänden eine geeignete Vorrichtung anzubringen, als im Bereich der Umfangsflächen des Ballens.

Eine geeignete Vorrichtung zum Zuführen des Folienstreifens kann den vorgeschlagenen, einfachen Aufbau haben, nämlich aus einer Vorratsrolle, wenigstens einer Zufuhreinrichtung und einer Leiteinrichtung bestehen, die die angegebenen Funktionen aufweisen. Die Zufuhreinrichtung kann z. B. zwei Rollen enthalten, von denen der Folienstreifen gezogen und geführt wird, wobei wenigstens eine hiervon mittels eines Elektro- oder Hydraulikmotors angetrieben wird.

Das Haftmittel kann zuverlässig in den Ballen eingefügt werden, wenn hierzu eine Vorrichtung mit einem Drückelement vorgesehen ist, die das Haftmittel zwischen das Gut drückt.

Weist das Drückelement Finger auf, z. B. infolge einer zackenförmigen Ausbildung, kann das Haftmittel tief in den Ballen eingedrückt werden, ohne daß hierfür hohe Kräfte aufgebracht werden müßten. Zudem kann auf diese Weise das Drückelement in Drehung versetzt, d. h. angetrieben werden, so daß das Haftmittel ständig entsprechend geführt werden kann.

Das Drückelement nimmt relativ wenig Raum in der Ballenbildungskammer ein, wenn in der entsprechenden Seitenwand eine Aussparung oder dergleichen vorgesehen ist, durch die das Drückelement teilweise in die Ballenbildungskammer ragt, während sein überwiegender Teil außerhalb der Ballenbildungskammer verbleibt.

Das Haftmittel kann auf einfache Weise bei geringem Aufwand zur Stirnseite des Ballens und in Eingriff mit dem Drückelement geführt werden, wenn ein Haftmittelführungsfinger vorgesehen ist, der dieses nach der Beendigung des Bindevorgangs erfaßt.

Die Betätigung des Haftmittelführungsfingers sollte stets auf den Bewegungszustand eines das Bindemittel während des Bindevorgangs führenden Bindearms abgestimmt sein, so daß eine problemlose Übergabe der Verlängerung des Bindemittels, die das Haftmittel darstellt, möglich ist. Hierzu steht der Haftmittelführungsfinger stets in funktionaler Verbindung mit dem Bindemittelarm, wobei der Haftmittelführungsfinger sowohl elektrisch als auch mechanisch über ein Gestänge betätigt werden kann.

In der Zeichnung sind zwei nachfolgend näher beschriebene Ausführungsbeispiele der Erfindung dargestellt. Es zeigt:
- Fig. 1: eine Erntemaschine in Seitenansicht,
- Fig. 2: eine erste Vorrichtung zum Binden eines Ballens in perspektivischer Darstellung,
- Fig. 3: eine Zufuhreinrichtung für die Vorrichtung nach Figur 2,
- Fig. 4: eine zweite Vorrichtung zum Binden eines Ballens,
- Fig. 5: ein Drückelement der Vorrichtung aus Figur 4 in vergrößerter Darstellung und in perspektivischer Darstellung und
- Fig. 6: das Drückelement im Schnitt und in Seitenansicht.

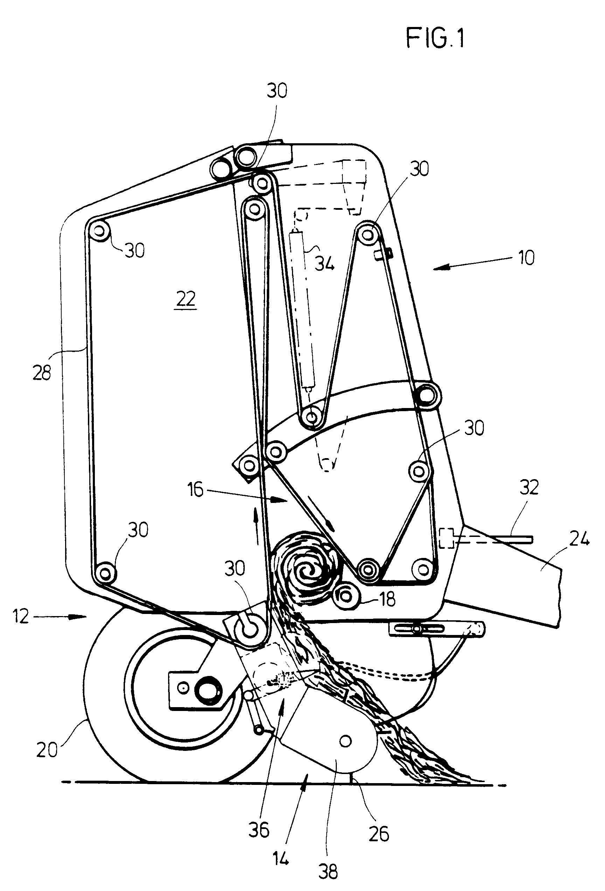

Eine in Figur 1 dargestellte Erntemaschine 10 in der Art einer Rundballenpresse setzt sich im wesentlichen aus einem Rahmen 12, einer Aufnahmevorrichtung 14, einer Ballenbildungskammer 16 und einer als Starterwalze ausgebildeten Walze 18 zusammen.

Die Erntemaschine 10 wird benutzt, um Stroh, Heu, Gras oder dergleichen Erntegüter, die auf einem Feld in Schwade abgelegt sind oder von dort abgetrennt werden, in zylindrische Ballen, sogenannte Rundballen, zu pressen. Sie weist eine Ballenbildungskammer 16 mit veränderbarem Durchmesser auf und entspricht in ihrem Aufbau im wesentlichen einer Ballenpresse, wie sie in der US-PS-4,428,282 beschrieben ist. Es ist aber auch möglich, der Erfindung eine andere Bauart einer Ballenpresse zugrunde zu legen, insbesondere eine mit einer nicht in ihrer Größe veränderbaren Ballenbildungskammer 16.

Der Rahmen 12 umfaßt ein Fahrwerk 20, Seitenwände 22 und eine Deichsel 24 zur Verbindung mit einem Ackerschlepper.

Die Aufnahmevorrichtung 14 wird in dem vorliegenden Ausführungsbeispiel von einer Fördervorrichtung 36 und einem als sogenannte Pick-Up ausgebildeten Förderer 38 gebildet, der in einem Schwad auf dem Boden abgelegtes Erntegut mittels umlaufender Förderelemente 26 aufnimmt und es mittels der Fördervorrichtung 36 der Ballenbildungskammer 16 zuführt.

Die Ballenbildungskammer 16 nimmt in Figur 1 und somit in ihrem anfänglichen Zustand die Form eines Keils ein, der an seinen Umfangsflächen von einem Satz Riemen 28 begrenzt wird. Jeder Satz Riemen 28 besteht aus mehreren nebeneinander angeordneten Riemen 28, die über Rollen 30 geführt werden. Eine oder mehrere der Rollen 30 werden über eine Antriebsvorrichtung 32 von dem Ackerschlepper aus in Drehung versetzt und bewegen die Riemen 28 in eine bestimmt Richtung. Die Riemen 28 werden gespannt, indem mittels einer als Feder ausgebildeten Spannvorrichtung 34 einige der Rollen 30 mit den darüberlaufenden Riemen 28 seitlich ausgelenkt werden. Es ist aus Figur 1 zu entnehmen, daß in die Ballenbildungskammer 16 Erntegut eingespeist und dort von den gegenläufigen Riemen 28 in Drehung versetzt wird, um einen Ballenkern zu bilden. Während der Fahrt über das Feld wird mehr und mehr Erntegut der Ballenbildungskammer 16 zugeführt, so daß sich der Ballenkern vergrößert und die ihn umgebenden Riemen 28 seitlich auslenkt. Die Riemen 28 können unter Erhöhung der Spannung an der Spannvorrichtung 34 mit den ihnen zugeordneten Rollen 30 so lange ausweichen, bis die Ballenbildungskammer 16 nahezu den gesamten Raum zwischen den Seitenwänden 22 eingenommen hat; dann ist der Preßvorgang zu beenden.

Die Walze 18 befindet sich im unteren Bereich der Ballenbildungskammer 16 und nimmt aufgrund ihrer Lage die Funktion einer Starterwalze ein, d. h. sie unterstützt in der Anfangsphase des Preßvorgangs die Bildung des Ballenkerns, indem sie das Erntegut in der zunächst noch leeren Ballenbildungskammer 16 mit in Drehung versetzt; hierzu bewegt sie sich entgegengesetzt zu der Bewegungsrichtung der angrenzenden Riemen 28.

Die Fördervorrichtung 36 folgt stromabwärts auf den Förderer 38 und transportiert das Erntegut in die Ballenbildungskammer 16.

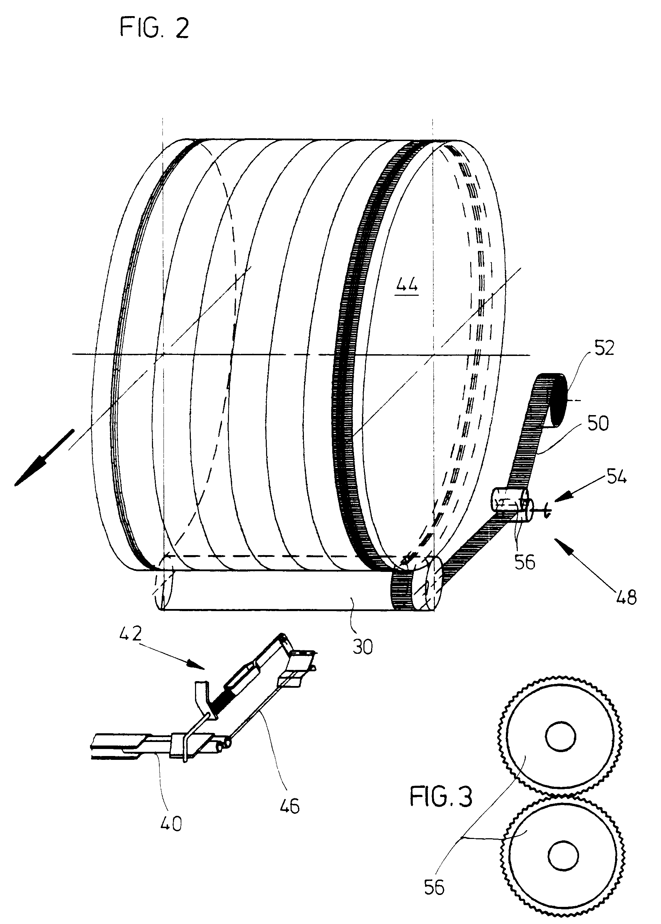

Figur 2 zeigt darüberhinaus einen Bindemittelführungsarm 40 und einen Schneidapparat 42, die zwischen der Aufnahmevorrichtung 14 und der Deichsel 24 bzw. der Walze 18 angeordnet sind.

Nachdem der Ballenbildungskammer 16 stets von der Aufnahmevorrichtung 14 Gut zugeführt wird, bildet sich darin ein Ballen 44, der einen gewünschten Durchmesser erreicht, wie er sich beispielsweise aus Figur 2 ergibt. Nach der Beendigung des Wickelvorgangs wird der Ballen 44 mittels Bindemittel 46 umschlungen, das mittels des Bindemittelführungsarms 40 durch einen Spalt zwischen der Aufnahmevorrichtung 14 und der Walze 18 zugeführt und während der weiteren Drehung des Ballens 44 spiralförmig auf diesen aufgelegt wird. Zum Ende des Bindevorgangs wird die Abgabeöffnung des Bindemittelführungsarms 40 zu einer Seitenwand 22 des Ballens 44 geführt und dort einige Zeit gehalten, so daß das Bindemittel 46 einen Seitenbereich des Ballens 44 mehrfach umschlingt. In dieser Stellung gelangt das Bindemittel 46 in den Schneidapparat 42 und wird schließlich durchtrennt.

Die bisher beschriebene Erntemaschine 10 entspricht herkömmlich bekannten Rundballenpressen, so daß es einer eingehenderen Beschreibung des Aufbaus und der Funktion nicht bedarf.

Um zu vermeiden, daß der von dem Schneidapparat 42 abgetrennte Endbereich des Bindemittels 46 lose auf der Umfangsfläche des Ballens 44 hängt, werden das erfindungsgemäße Verfahren und die hierzu entwickelte Vorrichtung verwendet, die im folgenden beschrieben werden.

Gemäß Figur 2 enthält eine Vorrichtung 48 nach einem ersten Ausführungsbeispiel ein Haftmittel 50, eine Vorratsrolle 52, und eine Zufuhreinrichtung 54.

Das Haftmittel 50 ist ca. 10 cm breit und ausreichend lang, um eine Vielzahl von Ballen 44 zu umschlingen. Die Wahl des Materials richtet sich danach, wie das Haftmittel 50 auf dem Ballen 44 haften soll. Mindestens drei Ausführungen sind hierfür geeignet. Einmal kann das Haftmittel 50 aus einer dünnen dehnfähigen Folie bestehen, die sich beim Anlegen eines ausreichend hohen Drucks aufgrund der Adhäsion mit der darunterliegenden Windung des Haftmittels 50 quasi stoffschlüssig verbindet. Zum zweiten kann das Haftmittel 50 auf seiner Unterseite mit einem Klebstoff versehen sein, der eine Verbindung mit der darunterliegenden Windung des Haftmittels 50, d. h. einer Folienbahn oder der Oberfläche des Ballens 44 erzielt. Schließlich kann es sich um ein Haftmittel 50 handeln, das Durchlässe in der Art eines Netzes aufweist, durch die sich das stengelige Erntegut hindurch erstreckt und das Haftmittel 50 auf diese Weise festhält. Vorzugsweise wird das Haftmittel 50 wenigstens eineinhalb Umdrehungen um den Ballen 44 geschlungen, so daß sich seine Windungen teilweise überlappen. Die Windungen werden nach der letzten Lage des Bindemittels 46 ausgerichtet, so daß in radialer Richtung nach außen auf das Bindemittel 46 und insbesondere auf dessen Endbereich das Haftmittel 50 folgt. Ist die Erntemaschine 10 mit zwei Bindemittelführungsarmen 40 versehen, die an unterschiedlichen Stellen auf dem Umfang des Ballens 44 letzte Windungen des Bindemittels 46 anbringen, muß für jeden Endbereich des Bindemittels 46 ein Haftmittel 50 vorgesehen werden.

Die Vorratsrolle 52 befindet sich auf der Rückseite der Erntemaschine 10, wie dies unter anderem an dem Pfeil, der deren Vorwärtsfahrtrichtung angibt, ersichtlich ist. Die Anbringung der Vorratsrolle 52 erfolgt auf nicht gezeigte Weise mittels einer Welle, die z. B. an der betreffenden Seitenwand 22 der Erntemaschine 10 parallel zu der Drehachse des Ballens 44 angebracht ist. Die Vorratsrolle 52 wird nicht angetrieben, unterliegt aber einer vorbestimmten Reibung, damit nicht mehr Haftmittel 50 abgezogen wird, als erforderlich ist, so daß Verwicklungen des Haftmittels 50 zwischen der Vorratsrolle 52 und der Zufuhreinrichtung 54 nicht entstehen können.

Die Zufuhreinrichtung 54 besteht in diesem Ausführungsbeispiel aus zwei Rollen 56, deren Drehachsen parallel zu der der Vorratsrolle 52 verlaufen. Die Rollen 56 sind auf ihrer Umfangsfläche gezahnt oder sonstwie in der Längsrichtung der Rollen 56 profiliert und nehmen auf diese Weise zwischen sich das Haftmittel 50 rutschfest auf. Die Rollen 56 befinden sich ebenfalls rückwärtig und außerhalb der Ballenbildungskammer 16. Wenigstens eine der Rollen 56 wird mittels eines nicht gezeigten Antriebs in Drehung versetzt, sobald der Bindevorgang beendet worden ist und das Haftmittel 50 der Umfangsfläche des Ballens 44 zugeführt werden kann. Als Antrieb eignet sich sowohl ein Elektro- als auch ein Hydraulikmotor, die auf geeignete Weise zu- bzw. abgeschaltet werden können. Darüberhinaus kann der Antrieb auch von den sonstigen Ketten- und Riementrieben, die vielfältig an der Erntemaschine 10 vorgesehen sind, abgeleitet werden. Die Profilierung ist so ausgebildet, daß das Haftmittel 50 in dem Spaltbereich zwischen den beiden Rollen 56 abreißt, sobald diese nicht mehr angetrieben, sondern angehalten werden, aber weiterhin von dem Ballen 44 an dem Haftmittel 50 gezogen wird.

Um das Haftmittel 50 dem Spalt zwischen der Aufnahmevorrichtung 14 und der Walze 18 zuzuführen, kann eine nicht gezeigte Leitvorrichtung vorgesehen werden, wie sie bereits an Rundballenpressen mit Netzbindung bekannt ist. Bei einer derartigen Leiteinrichtung wird das Haftmittel 50 auf einem Leitblech zu dem vorgenannten Spalt geführt, wobei sich das Leitblech sehr nahe an dem unteren, geringfügig geneigt verlaufenden Abschnitt der Riemen 28 erstreckt und das Haftmittel 50 infolge seiner Reibverbindung mit einem Riemen 28 zu dem Spalt mitgenommen wird, bis es an die Umfangsfläche des Ballens 44 gelangt und zwischen diesem und der Innenseite eines Riemens 28 im Bereich der Ballenbildungskammer 16 erfaßt wird. Der Weg des Haftmittels 50 verläuft über die unterste Rolle 30, die das Haftmittel 50 oberhalb der Aufnahmevorrichtung 14 zu der Ballenbildungskammer 16 hin umlenkt.

Die Vorratsrolle 52 und die Zufuhreinrichtung 54 sowie die nicht gezeigte Leiteinrichtung können anstatt an der Rückseite der Erntemaschine 10 auch an deren Vorderseite, also im Bereich der Deichsel 24 angeordnet werden. Darüberhinaus bietet sich jede Stelle an, an der das Haftmittel 50 in den Bereich zwischen der Außenfläche des Ballens 44 und der Innenfläche der Ballenbildungskammer 16 eingeführt werden kann.

Die Vorratsrolle 52, die Zufuhreinrichtung 54 und die Leiteinrichtung sind so angeordnet, daß sie und somit das Haftmittel 50 in einer Flucht mit den letzten Windungen des Bindemittels 46 im Seitenbereich des Ballens 44 liegen.

Die Zufuhr des Haftmittels 50 zu dem Ballen 44 wird manuell oder durch eine Steuerung, der eine bestimmte Zeitspanne oder eine bestimmte Umdrehungszahl des Ballens 44 beim Umwickeln mit Haftmittel 50 zugrunde gelegt wird, bestimmt. Hierzu kann ein Kontaktschalter an dem Bindemittelführungsarm 40 oder an dem Schneidapparat 42 vorgesehen werden, der den Wickelvorgang mit Haftmittel 50 auslöst.

Das mit dieser soweit beschriebenen Vorrichtung 48 durchführbare Verfahren läuft wie folgt ab.

Der Ballen 44 wird nach dem Ende der Aufnahme von zu pressendem Gut in Umfangsrichtung weiter bewegt, so daß schnurförmiges Bindemittel 46 zum Binden des Ballens 44 auf dessen Umfangsfläche aufgewickelt werden kann. Nach der Beendigung des Bindevorgangs wird das Bindemittel 46 an dem Schneidapparat 42 durchtrennt und die Zufuhreinrichtung 54 aktiviert, d. h. die Rollen 56 werden angetrieben. Die Zufuhreinrichtung 54 führt das Haftmittel 50 über die Leiteinrichtung zu der Umfangsfläche des Ballens 44, der es erfaßt und mitnimmt. Nach ca. eineinhalb Umwicklungen des Ballens 44 mit Haftmittel 50 wird der Antrieb der Rollen 56 beendet. Da der Ballen 44 weiter an dem Haftmittel 50 zieht, reißt dieses an den Rollen 56 ab und wickelt sich ebenfalls auf den Umfang des Ballens 44, wo es z. B. aufgrund der vorgenannten Adhäsionskraft haften bleibt. Anschließend wird das Drehen des Ballens 44 beendet und der Ballen 44 auf herkömmliche Weise aus der Ballenbildungskammer 16 ausgeworfen.

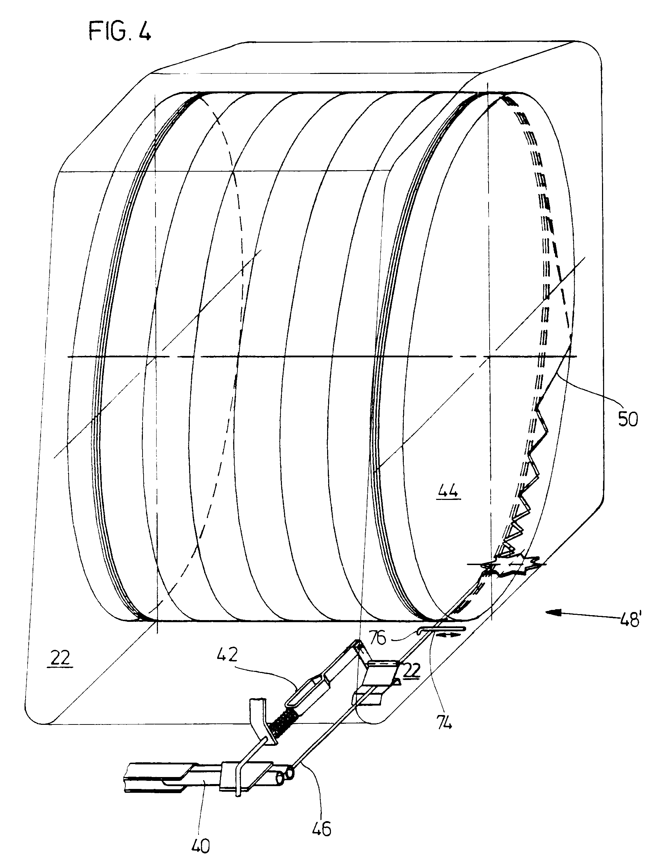

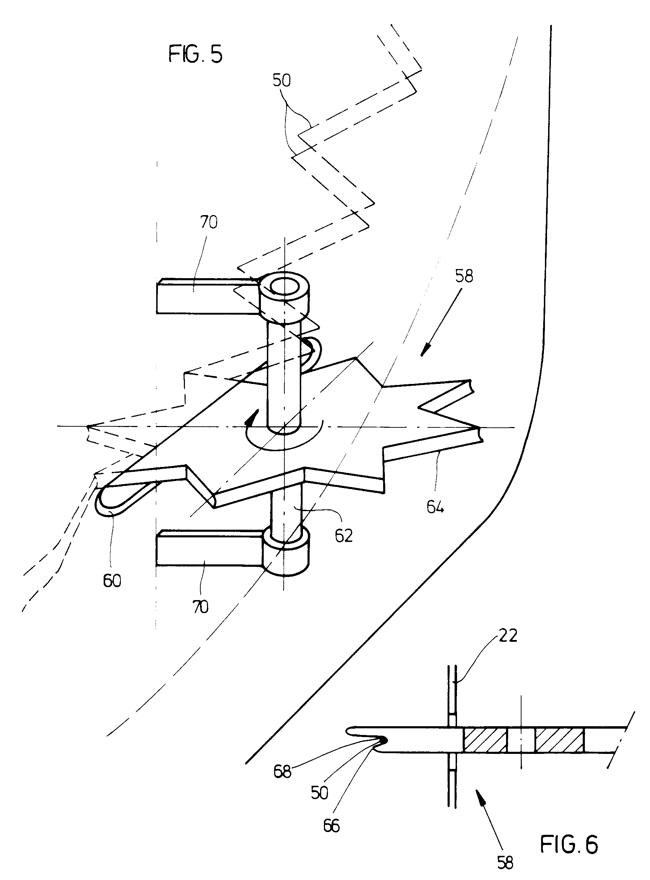

Des weiteren wird Bezug genommen auf die Darstellung in den Figuren 4 bis 6, die ein zweites Ausführungsbeispiel einer erfindungsgemäßen Vorrichtung 48' zeigen.

Hinsichtlich des Aufbaus der Erntemaschine 10 gilt bis zu dem Bindevorgang mittels des Bindemittelführungsarms 40 und dem Schneidapparat 42 das oben Beschriebene.

Im Gegensatz zu der erstgenannten Vorrichtung 48 enthält nunmehr die Vorrichtung 48' ein Drückelement 58 und die entsprechende Seitenwand 22 eine Öffnung 60, durch die das Drückelement 58 teilweise in die Ballenbildungskammer 16 hineinragen kann.

Das Drückelement 58 ist in der Art eines Zackenrades ausgebildet und in diesem Fall auf einer senkrecht verlaufenden Welle 62 drehbar gelagert. Aufgrund der zacken- oder sternförmigen Ausbildung des Drückelements 58 sind an seinem Außenumfang in diesem Ausführungsbeispiel acht gleichförmige Mitnehmerfinger 64 vorgesehen. Diese Mitnehmerfinger 64 reichen so weit in die Ballenbildungskammer 16 und somit in den Ballen 44 hinein, daß das Drückelement 58 von dem sich in der Ballenbildungskammer 16 drehenden Ballen 44 in Drehung versetzt wird.

An der Unterseite der Mitnehmerfinger 64 ist jeweils eine Haftmittelführung 66 in der Art einer Stufe angeformt, z. B. angedreht, in die eine sich radial nach außen öffnende Nut 68 eingearbeitet ist. Die Haftmittelführung 66, wie auch die Nut 68 verlaufen konzentrisch zu der Drehachse des Drückelements 58 und sind gegenüber der Spitze der Mitnehmerfinger 64 ca. 1 bis 2 cm radial nach innen versetzt. Die Öffnungsweite der Nut 68 entspricht ungefähr dem Durchmesser des Haftmittels 50, so daß dieses dort Aufnahme finden kann.

Die Welle 62 wird in einem unteren und einem oberen Träger 70 gehalten, die sich senkrecht zu der Außenfläche der Seitenwand 22 erstrecken und an ihrem außenliegenden Ende eine Öse 72 zur Aufnahme der Welle 62 aufweisen. Es kann sowohl die Welle 62 das Drückelement 58 starr aufnehmen und in den Ösen 72 drehen, als auch die Welle 62 in den Ösen 72 starr sitzen und das Drückelement 58 auf einem entsprechend angeformten Sitz auf der Welle 62 drehen.

Die Öffnung 60 ist derart angeordnet, daß die Mitnehmerfinger 64 an einer Stelle in die Stirnfläche des Ballens 44 eindringen, die ca. 10 cm Abstand zu der Umfangsfläche aufweist.

Es ist auch möglich, das Drückelement 58 mit der Welle 62 beweglich anzubringen, so daß es erst mit dem Beginn des Zuführens des Haftmittels 50 durch die Öffnung 60 in Eingriff mit dem Ballen 44 gebracht wird.

Die Vorrichtung 48' ist zudem mit einer Möglichkeit versehen, das Haftmittel 50 in den Spalt zwischen dem Ballen 44 und einer entsprechenden Seitenwand 22 einzuführen; hierzu werden zwei alternative Ausführungsformen vorgeschlagen.

Nach einer ersten Weise kann der Bindemittelführungsarm 40 über die herkömmlich vorhandene und nahe der Seitenwand 22 gelegene Ruhestellung in einer weitere Stellung entsprechend weit hinaus bewegt werden.

Oder es ist ein Haftmittelführungsfinger 74 vorgesehen, wie er in Figur 4 angedeutet ist. Dieser Haftmittelführungsfinger 74 erstreckt sich senktrecht zu einer Innenseite der Seitenwand 22 und weist einen Haken 76 auf, der geeignet ist, das Haftmittel 46 zu erfassen und es in den Bereich zwischen dem Ballen 44 und der Seitenwand 22 zu ziehen. Bevor der Haftmittelführungsfinger 74 auf die Seitenwand 22 zubewegt wird, um das Haftmittel 50 an diese heranzuführen, wird er angehoben oder um seine Längsachse gedreht, damit er das Haftmittel 50 erfassen kann. Diese Bewegungen werden mittels eines nicht gezeigten linear wirkenden Elektromotors und einer Kurvensteuerung oder dergleichen ausgeführt. Die Steuerung erfolgt derart, daß der Haftmittelführungsfinger 74 das Haftmittel 50 ergreift, sobald der Bindevorgang beendet ist, aber noch bevor das Haftmittel 50 von dem Schneidapparat 42 durchtrennt wird. Sobald das Haftmittel 50 zur Seitenwand 22 bewegt wird, wird es aufgrund der anhaltenden Zugkraft in den Bereich zwischen der Seitenwand 22 und dem Ballen 44 hineingezogen und bewegt sich solange von der Umfangsfläche aus radial nach innen, bis es in die Nut 68 eindringt. Da das Drückelement 58 aufgrund der Mitnehmerfinger 64 von dem sich in Rotation befindlichen Ballen 44 in Drehung versetzt wird, dringen die Mitnehmerfinger 64 mit dem an ihrer Unterseite anliegenden Bindemittel 46 ständig unter die Oberfläche des Ballens 44 ein und stoßen das Haftmittel 50 zwischen das gepreßte Gut. Die Reibung zwischen dem Haftmittel 50 und dem Gut verhindert, daß das Haftmittel 50 wieder herausgezogen wird. Nachdem das Haftmittel 50 auf ca. eine viertel bis eine halbe Umdrehung in die Stirnfläche des Ballens 44 "eingenäht" worden ist, wird der Schneidapparat 42 betätigt und das Haftmittel 50 durchtrennt. Anschließend wird die Drehbewegung des Ballens 44 eingestellt und der Ballen 44 aus der Ballenbildungskammer 16 ausgeworfen.

Nach alledem verläuft das mit der Vorrichtung 48' nach dem zweiten Ausführungsbeispiel ausführbare Verfahren wie folgt.

Der Ballen 44 wird, nachdem er die gewünschte Größe erreicht hat, wie herkömmlich mittels Bindemittel 46 gebunden. Am Ende des Bindevorgangs wird die das Haftmittel 50 darstellende Verlängerung des Bindemittels 46 zwischen die Seitenwand 22 und den Ballen 44 bewegt, bis sie zur Anlage an dem Drückelement 58 kommt. Das Drückelement 58 sticht das Haftmittel 50 in den Ballen 44 ein, bis es nicht mehr entfallen kann. Schließlich wird der Schneidapparat 42 betätigt, um das Haftmittel 50 durchzutrennen.

## Patentansprüche

1. Verfahren zum Binden eines Ballens (44), insbesondere eines Rundballens, mit folgenden Verfahrensschritten:
a) der Ballen (44) wird in Umfangsrichtung bewegt,
b) schnurförmiges Bindemittel (46) wird zum Binden des Ballens (44) auf dessen Umfangsfläche aufgewickelt,
c) der Bindevorgang wird beendet,
gekennzeichnet durch die weiteren Verfahrensschritte:
d) der Ballen (44) wird nach dem Bindevorgang weiter bewegt,
e) das Bindemittel (46) wird mittels eines Haftmittels (50) mit dem Ballen (44) verbunden und
f) das Haftmittel (50) von einer Vorratsrolle getrennt.

2. Verfahren nach Anspruch 1, dadurch gekennzeichnet, daß das Haftmittel (50) als Haftmittel ausgebildet ist.

3. Verfahren nach Anspruch 2, dadurch gekennzeichnet, daß das als Haftmittel ausgebildete Haftmittel (50) auf einem darunterliegenden Haftmittel haftet.

4. Verfahren nach Anspruch 2, dadurch gekennzeichnet, daß das Haftmittel (50) mit einem Klebemittel versehen ist.

5. Verfahren nach Anspruch 2, dadurch gekennzeichnet, daß das Haftmittel (50) Durchbrechungen aufweist, durch die darunterliegendes Gut des Ballens (44) hindurchtreten kann.

6. Verfahren nach Anspruch 1, dadurch gekennzeichnet, daß das Haftmittel (50) als eine Verlängerung des Bindemittels (46) ausgebildet ist und in den Ballen (44) eingedrückt wird.

7. Verfahren nach Anspruch 6, dadurch gekennzeichnet, daß das Haftmittel (50) in eine Stirnfläche des Ballens (44) eingedrückt wird.

8. Vorrichtung zur Durchführung eines Verfahrens nach einem der Patentansprüche 1 bis 5, gekennzeichnet durch eine Vorratsrolle (52), wenigstens eine Zufuhreinrichtung (54) und eine Leiteinrichtung, wobei die Vorratsrolle (52) ein Haftmittel (50) für mehrere Bindevorgänge trägt, die Zufuhreinrichtung (54) eine Zufuhr von Haftmittel (50) zu dem Ballen (44) zuläßt oder verhindert und die Leiteinrichtung das Haftmittel (50) von der Zufuhreinrichtung (54) zu der Umfangsfläche des Ballens (44) führt.

9. Vorrichtung nach Anspruch 8, dadurch gekennzeichnet, daß die Zufuhreinrichtung (54) zwei Rollen (56) aufweist, die zwischen sich das Haftmittel (50) reibschlüssig führen.

10. Vorrichtung nach Anspruch 9, dadurch gekennzeichnet, daß wenigstens eine der Rollen (56) mittels eines Elektro- oder Hydraulikmotors angetrieben wird.

11. Vorrichtung zur Durchführung eines Verfahrens nach einem der Patentansprüche 6 und 7, gekennzeichnet durch ein insbesondere rotierendes Drückelement (58), das eine Haftmittelführung (66) enthält.

12. Vorrichtung nach Anspruch 11, dadurch gekennzeichnet, daß das Drückelement (58) Mitnehmerfinger (64) aufweist, die in Eingriff mit dem Ballen (44) bringbar sind oder ständig mit diesem in Eingriff stehen.

13. Vorrichtung nach Anspruch 11 oder 12, dadurch gekennzeichnet, daß das Drückelement (58) als Zackenrad ausgebildet ist und durch eine Seitenwand (22) einer den Ballen (44) haltenden Ballenbildungskammer (16) zu dem Ballen (44) ragt.

14. Vorrichtung nach einem oder mehreren der vorherigen Ansprüche 11 bis 13, dadurch gekennzeichnet, daß ein Haftmittelführungsfinger (74) vorgesehen ist, der das Haftmittel (50) nach der Beendigung des Bindevorgangs in Eingriff mit der Haftmittelführung (66) bringt.

15. Vorrichtung nach Anspruch 14, dadurch gekennzeichnet, daß der Haftmittelführungsfinger (74) in Verbindung mit einem Bindemittelführungsarm (40) steht, der das Bindemittel (46) über die Umfangsfläche des Ballens (44) während des Bindevorgangs führt.

16. Rundballenpresse versehen mit einer der Vorrichtungen nach den Patentansprüchen 8 bis 15.
